# EUROPÄISCHE PATENTSCHRIFT

(11) **EP 2 433 526 B1**
(45) Veröffentlichungstag und Bekanntmachung des Hinweises auf die Patenterteilung: **01.08.2018**
(21) Anmeldenummer: 11179249.5
(22) Anmeldetag: 30.08.2011
(51) Int. Cl.: A47J 27/05

(54) **Gargutträger für ein Dampfgargerät sowie Dampfgargerät mit einem derartigen Gargutträger**
Carrier for products to be cooked for a steaming device and steaming device with such a carrier
Support de produit de cuisson pour un appareil de cuisson à vapeur ainsi qu'appareil de cuisson à vapeur doté d'un tel support de produit de cuisson

(30) Priorität: 23.09.2010 EP 10290505
(43) Veröffentlichungstag der Anmeldung: 28.03.2012
(73) Patentinhaber: BSH Hausgeräte GmbH, 81739 München (DE)
(72) Erfinder: Diederichs, Stefan, 77654 Offenburg (DE); Nagel, Martin, 67580 Forstheim (FR); Poiré, Stéphane, 67000 Strasbourg (FR)

(56) Entgegenhaltungen:
- EP-A1- 1 475 018
- EP-A1- 2 052 652
- EP-A1- 2 338 388
- EP-A2- 1 943 903
- WO-A1-02/11558
- WO-A1-2007/009195
- WO-A1-2009/000140
- WO-A1-2009/065197
- DE-A1- 3 404 543
- DE-U1-202007 010 050
- US-A- 776 926

## Beschreibung

Die Erfindung betrifft ein Gargerät, insbesondere ein Dampfgargerät.

Bei herkömmlichen Dampfgargeräten werden diese in den Garraum eingebracht und durch den in den Garraum eingebrachten Dampf zubereitet. Das Gargut ist dabei auf dem Boden der Muffel positioniert oder kann auf einem Gargutträger, beispielsweise einem Backblech oder einem Gitterrost, angeordnet sein. Bei derartigen Ausgestaltungen ist jedoch der Energieverbrauch relativ hoch und der Wirkungsgrad im Hinblick auf die Nutzung der thermischen Energie des Dampfes relativ niedrig.

Aus WO2009/000140 A1 ist ein Dampfgargerät mit elektrisch betriebenem Dampferzeuger bekannt, wobei sich das Gargut in aufeinandergestapelten Bambuskörben über einer Dampfkammer mit einem geregelten Dampferzeuger befindet.

Des Weiteren offenbart EP 1 943 903 A2 einen Dampfgarer, der ein wärmeleitendes Wannenteil zur Aufnahme eines Flüssigkeitsvorrats und einen auf dem Wannenteil angeordneten Dampfeinsatz zur Aufnahme für Gargut aufweist. Erfindungsgemäß ist vorgesehen, das Wannenteil des Garbehältnisses über eine Halteeinrichtung vom Boden des Backofens beabstandet anzuordnen.

Aus der DE 20 2007 010 050 U1 sind gestapelte Körbe eines Gargutträgers bekannt.

Es ist Aufgabe der vorliegenden Erfindung, ein Gargerät zu schaffen, welches energieeffizienter betrieben werden kann und bei welchem die thermische Energie des Dampfs besser genutzt werden kann.

Diese Aufgabe wird durch ein Gargerät, welches die Merkmale nach Anspruch 1 aufweist, gelöst.

Ein erfindungsgemäßes Gargerät weist einen Gargutträger auf. Der Gargutträger umfasst eine Mehrzahl von Körben, die ineinander geschachtelt angeordnet sind. Durch einen derartigen multiplen, aus mehreren separaten Komponenten aufgebauten Gargutträger, dessen Komponenten darüber hinaus auch noch in ihrer Form und ihrer relativen Position zueinander spezifiziert sind, kann das darin eingebrachte Gargut im Hinblick auf verbesserte Energieeffizienz des Dampfgargeräts und verbesserte thermische Nutzung der Energie des Dampfes zubereitet werden.

Vorzugsweise weist der oberste Korb einen Deckel als Abdeckung auf, so dass der Gargutträger quasi vollumfänglich geschlossen werden kann und im Inneren des Gargutträgers das Gargut angeordnet ist. Dies trägt nochmals verbessert zur thermischen Energienutzung des Dampfes für die Zubereitung bei.

Vorzugsweise ist der Deckel zur Einbringung und Herausnahme des Garguts abnehmbar. Dadurch kann eine einfache Zugänglichkeit zum Gargutträgerinneren ermöglicht werden.

Vorzugsweise sind zumindest die Böden der Körbe und der Deckel aus einem Dampf durchlässigen Material ausgebildet oder weisen Löcher auf, um den Dampf durchzulassen.

Vorzugsweise ist zumindest ein Korb aus einem Bambusmaterial ausgebildet. Dieses eignet sich besonders hervorragend im Hinblick auf die Aufnahme der thermischen Energie des Dampfes und somit in der Erhitzung des Garguts im Inneren des Bambuskorbes. Des Weiteren ist es sehr leicht.

Die Körbe sind so gestapelt und bereichsweise ineinander geschachtelt, dass zwischen zwei Böden zweier benachbarter und aufeinander folgenden Körben ein Aufnahmeraum für Gargut gebildet ist. Bei mehreren Körben kann dadurch auch eine Mehrzahl von separierten übereinander ausgebildeten Aufnahmeräumen gebildet werden, wobei insbesondere Dampf durch die Aufnahmeräume ziehen kann.

Es kann auch vorgesehen sein, dass zumindest ein weiterer Korb aus Kunststoff, insbesondere Silikon, ausgebildet ist. Ebenso kann vorgesehen sein, dass zumindest ein weiterer Korb aus Metall, insbesondere Edelstahl oder mit Aluminium beschichtet, ausgebildet ist. Erfindungsgemäss ist vorgesehen, dass der Gargutträger im Betrieb des Geräts auf einer Verdampfereinheit, insbesondere einer am Boden einer den Garraum begrenzenden Muffel angeordneten Verdampferschale, positioniert ist. Insbesondere ist der Gargutträger unmittelbar auf dieser Verdampferschale aufgebracht.

Vorzugsweise ist vorgesehen, dass das Dampfgargerät eine Steuereinheit aufweist, mit welcher abhängig vom Druck und/oder von der Temperatur in dem Gargutträger eine Heizung zum Verdampfen von Flüssigkeit einer Verdampfervorrichtung des Geräts regelbar ist.

Durch den Gargutträger und das Dampfgargerät kann ein Dampffluss direkt über das Gargut hinweg erfolgen. Die Körbe des Gargutträgers sind untereinander und zur Verdampfereinheit hin relativ abgedichtet. Der Dampf kondensiert primär am Gargut.

Bei der Zubereitung wird die Energieaufnahme vom Gargut mit fortlaufender Zeitdauer nachlassen, und eine gewisse Sättigung einsetzen. Der Druck im Garraum wird kontinuierlich ansteigen. Entsprechend wird auch der Druck im Gargutträger ansteigen. In Abhängigkeit vom Überdruck wird die Heizleistung der Verdampfereinheit geregelt. Der Überdruck wird insbesondere mit einer geeigneten Messeinheit erfasst. Vorzugsweise ist die Muffel in Abhängigkeit vom Garprozess gezielt kühlbar.

Die Temperatur im Garraum wird kontinuierlich ansteigen. Entsprechend wird auch die Temperatur im Gargutträger ansteigen. Insbesondere in Abhängigkeit von der Temperatur wird die Heizleistung der Verdampfereinheit geregelt. Die Temperatur wird insbesondere mit einer geeigneten Messeinheit erfasst. Der Temperaturparameter wird vorzugsweise mit zur Regelung der Verdampfereinheit benutzt.

Insbesondere wird durch die Erfindung ermöglicht, dass im Leerlauf bereits nach relativ kurzer Zeitdauer < 2 min, insbesondere < 90 sec eine Temperatur von etwa 100 °C in dem insbesondere aus Bambuskörben ausgebildeten Gargutträger erreicht ist. Diese Temperatur kann relativ einfach dauerhaft und kontinuierlich gehalten werden, was auf das Material der Körbe, die prinzipielle Form als Korb und auch die Ineinanderschachtelung zurückzuführen ist.

Darüber hinaus sind die Kosten für derartige Bambuskörbchen relativ gering.

Im Vergleich zu herkömmlichen Dampfgargeräten mit entsprechenden Gargutträgern wird eine sehr hohe Energieausbeute erreicht. Bei gedrosselter Leistung können weitere Energieeinsparpotentiale erzielt werden, die im Vergleich zu herkömmlichen Dampfgargeräten bis zu 20 % und mehr betragen können.

Darüber hinaus ist ein wesentlich geringerer Wasserverbrauch von bis zu 50 % möglich. Durch die spezifische Ausgestaltung des Gargutträgers kann auch erreicht werden, dass wenig bis kein Dampf in der Umgebung des Dampfgargeräts auftritt, wodurch auch unerwünschte Feuchtigkeit in einer Küche oder dergleichen vermieden werden kann. Dadurch kann auch das Auftreten von unerwünschtem Kondensat an Möbelfronten, Fenstern oder sonstigen Gegenständen in einer Küche vermieden werden.

Insbesondere kann eine sehr hohe erwünschte Dampftemperatur am Lebensmittel von annähernd 100 °C erreicht werden. Dadurch kann die Gardauer verringert werden, wobei dies ebenfalls bis zu 20 % und mehr betragen kann. Darüber hinaus ist eine sehr gute Dampfqualität möglich.

In einem als einfacher Backofen ohne Dampffunktion oder als Dampfbackofen ausgeführten Gargerät ist der Gargutträger auf einer Verdampfereinheit positioniert, die von einem in den Garraum eingesetzten Garraumteiler gebildet ist, welcher den Garraum in einen oberen Garraumteil und in einen unteren Garraumteil unterteilt. In dem oberen Garraumteil befindet sich der erfindungsgemäße Gargutträger, der über die Verdampfereinheit des Garraumteilers mit Dampf versorgt wird. Der untere Garraumteil kann hiervon unabhängig in einer beliebigen Heizart betrieben werden, gegebenenfalls auch in einer Heizart ohne Dampf.

Bei Verwendung eines erfindungsgemäßen Gargutträgers in Kombination mit einem Garraumteiler mit Verdampfereinheit kann auch ein herkömmliches Gargerät ohne eingebaute Dampffunktion als Dampfgargerät betrieben werden.

Der Garraumteiler stellt ein aus dem Garraum entfernbares Zubehör dar. Er besitzt ein elektrisches Heizelement, das über geeignete elektrische Kontakte mit der Stromversorgung des Gargeräts verbunden ist.

Ausführungsbeispiele der Erfindung werden nachfolgend anhand schematischer Zeichnungen näher erläutert. Es zeigen:
- Fig. 1: eine schematische Schnittdarstellung durch ein Ausführungsbeispiel eines erfindungsgemäßen Dampfgargeräts, welches nur im Hinblick auf die Ausgestaltung aller Körbe aus Bambus bekannt ist;
- Fig. 2: eine perspektivische Darstellung eines in einen Garraum des Dampfgargeräts eingebrachten ersten Ausführungsbeispiels eines erfindungsgemäßen Gargutträgers;
- Fig. 3: eine perspektivische Darstellung eines zweiten Ausführungsbeispiels eines Gargutträgers; und
- Fig. 4: ein weiteres Ausführungsbeispiel eines erfindungsgemäßen Gargutträgers in perspektivischer Darstellung.

In den Figuren werden gleiche oder funktionsgleiche Elemente mit den gleichen Bezugszeichen versehen.

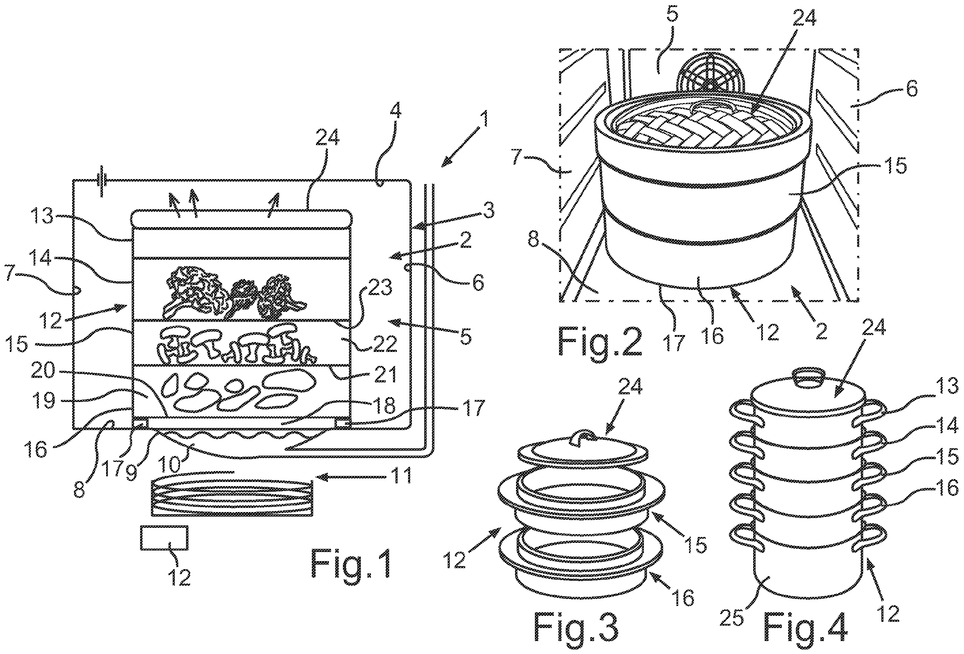

In Fig. 1 ist in stark vereinfachter Schnittdarstellung ein Dampfgargerät 1 gezeigt, welches einen Garraum 2 aufweist, der durch eine Muffel 3 begrenzt ist. Die Muffel 3 weist eine Decke 4, eine Rückwand 5, vertikale Seitenwände 6 und 7 sowie einen Boden 8 auf. In dem Boden 8 ist eine Verdampferschale 9 angeordnet, in der zu verdampfendes Wasser 10 angeordnet ist. Unterhalb des Bodens 8 und unter der Verdampferschale 9 ist eine Heizung 11 angeordnet, die über eine Steuereinheit 12 steuerbar ist. Dadurch kann das Wasser 10 aufgeheizt und verdampft werden.

In dem Garraum 2 ist ein Gargutträger 12 eingebracht, der aus einer Mehrzahl von separaten und reversibel zusammenfügbaren und trennbaren Körben 13, 14, 15 und 16 zusammengesetzt ist. Die Körbe 13 bis 16 sind ineinander geschachtelt und im Ausführungsbeispiel aus einem Bambusmaterial ausgebildet. Der Gargutträger 12 ist direkt über der Verdampferschale 10 aufgestellt. Vorzugsweise weist er an seiner Unterseite und somit an der Unterseite des unteren Korbes 16 Füße 17 auf, die auch beispielsweise als umlaufender Ring ausgebildet sein können. Dadurch wird eine gewisse Standerhöhung erreicht, und dennoch tritt der erzeugte Dampf 18 nicht zur Seite aus, sondern gelangt direkt zum untersten Korb 16.

Wie in der Schnittdarstellung gemäß Fig. 1 zu erkennen ist, können die Körbe allesamt in etwa gleich groß sein, so dass die Böden im Wesentlichen aneinanderliegend angeordnet sind. Es ist eine Ausgestaltung des Gargutträgers 12 vorgesehen, bei der die Körbe im Hinblick auf ihre Tiefe so gestaltet sind, dass jeweils Zwischenräume ausgebildet sind. So kann in diesem Zusammenhang vorgesehen sein, dass aufgrund der Form und Bauhöhe der Körbe 13 bis 16 ein erster innerer Aufnahmeraum 19 gebildet ist, der sich zwischen dem Boden des äußersten Korbes 16 und des Boden des in der Schichtenlage nach innen folgenden zweiten Korbes 15 erstreckt. Die beiden Böden 20 und 21 sind dabei gemäß der Darstellung entsprechend beabstandet.

Es kann dann vorgesehen sein, dass beispielsweise zwischen den Körben 15 und 14 ein weiterer Aufnahmeraum 22 gebildet ist, wobei auch hier der Abstand zwischen den Böden 21 und 23 entsprechend dimensioniert ist. Es werden hier somit zwei separate Aufnahmeräume 19 und 22 gebildet, in denen jeweils Gargut zur Dampfgarung aufgenommen werden können.

Der Gargutträger 12 ist nach oben hin durch einen Deckel 24 als Abdeckung verschließbar.

In Fig. 2 ist eine perspektivische Darstellung des Garraums 2 mit dem in perspektivischer Darstellung gezeigten Gargutträger 12 gemäß der Ausführung in Fig. 1 gezeigt. Die Ineinanderschachtelung der Körbe 13 bis 16 kann wie auch in der Ausführung in Fig. 1 vollständig oder teilweise sein, so dass im Hinblick auf die teilsweise Ineinanderstellung auch eine Ausführung umfasst ist, bei der die Körbe 13 bis 16 quasi nur aufeinandergestellt und nur minimal überlappend ineinandergreifend positioniert sind.

Bei der Ausgestaltung in Fig. 2 ist vorgesehen, dass beispielsweise ein Korb, insbesondere der Korb 13, entfernt ist und darüber hinaus auch der Korb 14 entfernt ist. Es sind somit lediglich die beiden Körbe 15 und 16 gezeigt. Dies zeigt auch die flexible und variable Gestaltung und den einfachen und schnell wandelbaren Aufbau des Gargutträgers 12.

In Fig. 3 ist in einer perspektivischen Darstellung ein weiteres Ausführungsbeispiel eines Gargutträgers 12 gezeigt. Im Unterschied zur Ausgestaltung gemäß Fig. 1 und Fig. 2 sind hier die in der Anzahl und Formgebung lediglich beispielhaft dargestellten Körbe 15 und 16 aus einem Kunststoffmaterial, insbesondere Silikon ausgebildet. Entsprechend trifft dies auch für den Deckel 24 zu.

In Fig. 4 ist in einer weiteren perspektivischen Darstellung ein weiteres Ausführungsbeispiel eines Gargutträgers 12 gezeigt. Hier sind eine Mehrzahl von aus Edelstahl ausgebildeten Körben 13, 14, 15, 16 und 25 dargestellt, die quasi minimal ineinander geschachtelt sind und im Wesentlichen aufeinandergestapelt sind.

Im Sinne der Anmeldung wird somit mit einem Ineinandergeschachteltsein sowohl eine Ineinanderführung der Körbe im Wesentlichen über ihre gesamte Bauhöhe verstanden, als auch eine Aneinanderanordnung, bei der in Richtung der Bauhöhe die Ineinanderüberlappung minimal ist und die Körbe im Wesentlichen aufeinandergestapelt sind.

### Bezugszeichenliste

- 1: Dampfgargerät
- 2: Garraum
- 3: Muffel
- 4: Decke
- 5: Rückwand
- 6, 7: Seitenwand
- 8: Boden
- 9: Verdampferschale
- 10: Wasser
- 11: Heizung
- 12: Steuereinheit
- 13, 14, 15, 16: Korb
- 17: Fuß
- 18: Dampf
- 19: Aufnahmeraum
- 20, 21: Boden
- 22: Aufnahmeraum
- 23: Boden
- 24: Deckel
- 25: Korb

## Patentansprüche

1. Gargerät (1) mit einem Garraum (2) und einem Gargutträger (12)), **dadurch kennzeichnet, dass** der Gargutträger (12) eine Mehrzahl von Körben (13 bis 16, 25) aufweist, die zumindest bereichsweise ineinander geschachtelt angeordnet sind, wobei zumindest zwei Körbe (13 bis 16, 25) so ineinander geschachtelt und aufeinander gestapelt sind, dass zwischen zwei Böden (20, 21, 23) von zwei nacheinander folgenden Körben (13 bis 16, 25) ein Freiraum (19, 22) zur Aufnahme von Gargut ausgebildet ist, wobei zumindest ein Korb (16,25) aus Kunststoff oder Edelstahl ist, wobei der Gargutträger (12) im Betrieb des Geräts (1) auf am Boden (8) einer den Garraum (2) begrenzenden Muffel (3) angeordneten Verdampferschale (9), positioniert ist, oder der Gargutträger (12) im Betrieb des Geräts (1) auf einer Verdampfereinheit (9, 11) positioniert ist, die von einem in den Garraum (2) des Gargerätes (1) eingesetzten Garraumteiler gebildet ist, welcher den Garraum (2) in einen oberen Garraumteil und in einen unteren Garraumteil unterteilt.

2. Gargerät (1) nach Anspruch 1, **dadurch gekennzeichnet, dass** der oberste Korb (13 bis 16, 25) einen Deckel (24) als Abdeckung aufweist.

3. Gargerät (1) nach Anspruch 2, **dadurch gekennzeichnet, dass** der Deckel (24) zur Einbringung oder Herausnahme des Garguts abnehmbar ist.

4. Gargerät (1) nach einem der vorhergehenden Ansprüche, **dadurch gekennzeichnet, dass** zumindest ein weiterer Korb (13 bis 16), aus Bambus ist.

5. Gargerät (1) nach einem der vorhergehenden Ansprüche, **dadurch gekennzeichnet, dass** zumindest ein weiterer Korb (13 bis 15) aus Kunststoff, insbesondere Silikon, ist.

6. Gargerät (1) nach einem der vorhergehenden Ansprüche, **dadurch gekennzeichnet, dass** zumindest ein weiterer Korb (13 bis 15) aus Metall, insbesondere Edelstahl, ist oder mit Aluminium beschichtet ist.

7. Gargerät nach einem der vorhergehenden Ansprüche, **dadurch gekennzeichnet, dass** es ein Dampfgargerät ist

8. Gargerät (1) nach einem der vorhergehenden Ansprüche, **dadurch gekennzeichnet, dass** der Garraumteiler ein elektrisches Heizelement aufweist.

9. Gargerät (1) nach einem der vorhergehenden Ansprüche, **dadurch gekennzeichnet, dass** der Garraumteiler als ein aus dem Garraum (2) entfernbares Zubehörteil ausgeführt ist.

10. Gargerät (1) nach einem der vorhergehenden Ansprüche, welches eine Steuereinheit (12) aufweist, mit welcher abhängig vom Druck und/oder der Temperatur in dem Gargutträger (12) eine Heizung (11) zum Verdampfen von Flüssigkeit (10) einer Verdampfereinheit (9, 11) des Geräts (1) regelbar ist.

## Claims

1. Cooking appliance (1) with a cooking chamber (2) and a carrier for products to be cooked (12), **characterised in that** the carrier for products to be cooked (12) has a plurality of baskets (13 to 16, 25), which are arranged in a nested manner in one another at least in regions, wherein at least two baskets (13 to 16, 25) are nested in one another and stacked on top of one another such that a free space (19, 22) for receiving products to be cooked is embodied between two bases (20, 21, 23) of two consecutive baskets (13 to 16, 25), wherein at least one basket (16, 25) is made of plastic or stainless steel, wherein during operation of the appliance (1) the carrier for products to be cooked (12) is positioned on an evaporator tray (9) arranged at the base (8) of a muffle (3) delimiting the cooking chamber (2), or during operation of the appliance (1) the carrier for products to the cooked (12) is positioned on an evaporator unit (9, 11), which is formed by a cooking chamber partition introduced into the cooking chamber (2) of the cooking appliance (1), which partition divides the cooking chamber (2) into an upper cooking chamber part and a lower cooking chamber part.

2. Cooking appliance (1) according to claim 1, **characterised in that** the uppermost basket (13 to 16, 25) has a lid (24) as a cover.

3. Cooking appliance (1) according to claim 2, **characterised in that** the lid (24) can be removed to insert or extract the product to be cooked.

4. Cooking appliance (1) according to one of the preceding claims, **characterised in that** at least one further basket (13 to 16) is made of bamboo.

5. Cooking appliance (1) according to one of the preceding claims, **characterised in that** at least one further basket (13 to 15) is made of plastic, in particular silicone.

6. Cooking appliance (1) according to one of the preceding claims, **characterised in that** at least one further basket (13 to 15) is made of metal, in particular stainless steel, or is coated with aluminium.

7. Cooking appliance (1) according to one of the preceding claims, **characterised in that** it is a steam cooking appliance.

8. Cooking appliance (1) according to one of the preceding claims, **characterised in that** the cooking chamber partition has an electric heating element.

9. Cooking appliance (1) according to one of the preceding claims, **characterised in that** the cooking chamber partition is designed as an accessory part which can be removed from the cooking chamber (2).

10. Cooking appliance (1) according to one of the preceding claims, which has a control unit (12) with which a heater (11) for evaporating liquid (10) of an evaporator unit (9, 11) of the appliance (1) can be regulated depending on the pressure and/or the temperature in the carrier for products to be cooked (12).

## Revendications

1. Appareil de cuisson (1) avec un espace de cuisson (2) et un support pour aliments à cuire (12), **caractérisé en ce que** le support pour aliments à cuire (12) présente une pluralité de paniers (13 à 16, 25), disposés au moins par endroits de façon emboîtée les uns dans les autres, dans lequel au moins deux paniers (13 à 16, 25) sont emboîtés les uns dans les autres et empilés de telle sorte qu'un espace libre (19, 22) pour l'accueil d'aliments à cuire est constitué entre deux fonds (20, 21, 23) de deux paniers consécutifs (13 à 16, 25), dans lequel au moins un panier (16, 25) est en plastique ou en acier inoxydable, dans lequel le support pour aliments à cuire (12) est positionné, durant le fonctionnement de l'appareil (1), sur une coupelle d'évaporation (9) disposée sur le fond (8) d'un moufle (3) délimitant l'espace de cuisson (2) ou le support pour aliments à cuire (12) est positionné, durant le fonctionnement de l'appareil (1), sur une unité d'évaporation (9, 11) constituée par un diviseur d'espace de cuisson inséré dans l'espace de cuisson (2) de l'appareil de cuisson (1), lequel diviseur divise l'espace de cuisson (2) en une partie d'espace de cuisson supérieure et en une partie d'espace de cuisson inférieure.

2. Appareil de cuisson (1) selon la revendication 1, **caractérisé en ce que** le panier supérieur (13 à 16, 25) présente un couvercle (24) en guise de capot.

3. Appareil de cuisson (1) selon la revendication 2, **caractérisé en ce que** le couvercle (24) est amovible afin de poser ou de retirer les aliments à cuire.

4. Appareil de cuisson (1) selon l'une des revendications précédentes, **caractérisé en ce qu'**au moins un panier supplémentaire (13 à 16) est en bambou.

5. Appareil de cuisson (1) selon l'une des revendications précédentes, **caractérisé en ce qu'**au moins un panier supplémentaire (13 à 15) est en plastique, en particulier en silicone.

6. Appareil de cuisson (1) selon l'une des revendications précédentes, **caractérisé en ce qu'**au moins un panier supplémentaire (13 à 15) est en métal, en particulier en acier inoxydable ou revêtu d'aluminium.

7. Appareil de cuisson (1) selon l'une des revendications précédentes, **caractérisé en ce qu'**il s'agit d'un appareil de cuisson à la vapeur.

8. Appareil de cuisson (1) selon l'une des revendications précédentes, **caractérisé en ce que** le diviseur d'espace de cuisson présente un élément chauffant électrique.

9. Appareil de cuisson (1) selon l'une des revendications précédentes, **caractérisé en ce que** le diviseur d'espace de cuisson est exécuté sous la forme d'un accessoire amovible de l'espace de cuisson (2).

10. Appareil de cuisson (1) selon l'une des revendications précédentes, lequel présente une unité de commande (12) permettant de réguler en fonction de la pression et/ou de la température au sein du support pour aliments à cuire (12) un chauffage (11) pour évaporer le fluide (10) d'une unité d'évaporation (9, 11) de l'appareil (1).
